# EUROPEAN PATENT SPECIFICATION

(11) **EP 3 127 421 B1**
(45) Date of publication and mention of the grant of the patent: **10.11.2021**
(21) Application number: 15773194.4
(22) Date of filing: 04.03.2015
(51) Int. Cl.: A01G 7/00

(54) **ILLUMINATION DEVICE FOR PLANT GROWTH AND PLANT GROWING METHOD**
BELEUCHTUNGSVORRICHTUNG FÜR PFLANZENWACHSTUM UND PFLANZENZUCHTVERFAHREN
DISPOSITIF D'ÉCLAIRAGE POUR LA CROISSANCE DE PLANTES, ET PROCÉDÉ DE CROISSANCE DE PLANTES

(30) Priority: 31.03.2014 JP 2014072090
(43) Date of publication of application: 08.02.2017
(73) Proprietor: Shin-Etsu Handotai Co., Ltd., Tokyo (JP)
(72) Inventor: KAWAHARA, Minoru, Annaka-shi, Gunma (JP); YAMADA, Masato, Tokyo (JP)
(74) Representative: Wibbelmann, Jobst
(86) International application number: PCT/JP2015/001139
(87) International publication number: WO 2015/151405

(56) References cited:
- WO-A1-2014/037860
- CN-A- 1 729 749
- JP-A- H08 103 167
- JP-A- H08 331 980
- JP-A- 2002 199 816
- US-A- 3 529 379
- None

## Description

### TECHNICAL FIELD

The present invention relates to a lighting device for raising plant and a plant raising method.

### BACKGROUND ART

A technology for raising and harvesting plants in a fully controlled-type closed factory is in demand. Conventionally, a fluorescent lamp has been used as this type of lighting device, but since its power consumption is large, an LED (light emitting diode) lighting device for which energy saving can be expected has been in demand. However, only by replacing it with the fluorescent lamp type LED illumination cannot realize favorable growth, and LED illumination which grows plants well has been in demand.

As this type of lighting device, constitution described in Patent Literatures 1 to 3, for example, has been known. Patent Literature 1 discloses a technology of cultivating a plant with pulse light with a cycle of 0.5 µ seconds to 20 milliseconds and a range of a duty ratio (DT ratio) of 20 to 60%. The literature describes that, by using only red light or a combination of a blue light and the red light as a light source, more drastic energy saving can be achieved than irradiation of continuous light.

Patent Literature 2 discloses a light source irradiating light with an integral value of each of the red light and the infrared light larger than the other and describes that a blossoming action of a long-day plant can be controlled.

Patent Literature 3 discloses a plant cultivating device having a light emitting diode emitting light having 0 to 50% of a photon flux with a wavelength of 450 nm in blue with the wavelength of 400 nm to the wavelength of 500 nm, 40 to 100% of the photon flux with the wavelength of 660 nm in red with the wavelength of 600 nm to the wavelength of 700 nm, and 0 to 10% of the photon flux with the wavelength of 730 nm in far red with the wavelength of 700 nm to the wavelength of 800 nm, total of 100%. This plant cultivating device maintains an appreciative value of the plant by irradiating an optimal wavelength in an optimal photon flux density without giving damage such as spindly growth, sunscald or the like caused by excessive far red light to photosynthesis or formation of a form of the plant.

Patent Literature 4 discloses lighting devices having a mix of light sources.

Patent Literature 5 discloses an apparatus for transporting plants comprising fluorescent tubes.

Patent Literature 6 discloses a lighting devices for irradiating different parts of a plant to different light conditions.

### CITATION LIST

### PATENT LITERATURES

Patent Literature 1: Japanese Patent Laid-Open Publication No. H8-242694
Patent Literature 2: Japanese Patent Laid-Open Publication No. 2002-199816
Patent Literature 3: Japanese Patent Laid-Open Publication No. H10-178899
Patent Literature 4: CN1729749A
Patent Literature 5: US 3,529,379
Patent Literature 6: WO 2014/037860 A1

### SUMMARY OF INVENTION

### TECHNICAL PROBLEM

However, in the case of the lighting device described in Patent Literature 1, spindly growth of the plant and the like can occur, and cultivation results are not necessarily favorable in some cases. Particularly, spindly growth can easily occur when the DT ratio is small, which is a problem.

Moreover, Patent Literature 2 discloses that the blossoming action of flowers can be controlled by using infrared light, but an influence to photosynthesis required for growth of the plant is not clear.

Patent Literature 3 discloses a device for continuously irradiating RGB + infrared LED, but such a device consumes a large quantity of energy and many types of LEDs such as green and blue need to be mounted on lighting, which leads to a problem that constitution becomes complicated. Regarding the infrared light, it is a technology of stopping irradiation in a growth stage of the plant. Specifically, it is a technology of irradiating the infrared light immediately before a dark period in order to prevent a phenomenon that floral buds differentiate before roots enrich.

The present invention was made in view of the aforementioned problems and has an object to provide a lighting device for raising plant and a plant raising method which promote photosynthesis of a plant and raise the plant well.

### SOLUTION TO PROBLEM

In order to achieve the aforementioned object, in the present invention, a lighting device for raising a plant including a red LED having an emission wavelength between 600 and 680 nm and a far red LED or an infrared LED having an emission wavelength between 700 and 900 nm, characterized in that the lighting device is configured to alternately irradiate the red light emitted by the red LED and the far red light emitted by the far red LED or the infrared light emitted by the infrared LED in a pulse state, wherein the lighting device is configured to arbitrarily change the irradiation time of the red LED and irradiation time of the far red LED or the infrared LED, respectively, is provided.

With such lighting device for raising a plant, photosynthesis of the plant can be further promoted, and growth of the plant can be promoted as compared with a conventional device irradiating a fluorescent lamp or a device irradiating LEDs with a single wavelength or with different wavelengths at the same time.

Moreover, any one or more of off time and irradiation intensity of the red LED and the far red LED or the infrared LED can be preferably changed arbitrarily.

With such lighting device for raising a plant, light can be irradiated under the best irradiation condition according to a type of the plant and each growth stage.

Moreover, another light source capable of emitting light other than the red light, the far red light, and the infrared light or light in all the wavelength regions of visible light is preferably further provided.

Such lighting device for raising a plant is suitable for raising a plant requiring the light other than the red light, the far red light, and the infrared light or the light in all the wavelength regions of the visible light for growth.

Moreover, the another light source is preferably a light source capable of emitting blue light or white light.

Since the blue light and the white light may be needed for growth depending on a plant type, the light source capable of emitting the blue light or the white light is preferably added in accordance with the plant to be raised.

Furthermore, in the present invention, a plant raising method comprising steps of:
preparing a lighting device including a red LED having an emission wavelength between 600 and 680 nm and a far red LED or an infrared LED having an emission wavelength between 700 and 900 nm, wherein the red light emitted by the red LED and the far red light emitted by the far red LED or the infrared light emitted by the infrared LED can be alternately irradiated in a pulse state; and
irradiating the red light emitted by the red LED and the far red light emitted by the far red LED or the infrared light emitted by the infrared LED alternately in a pulse state by using the lighting device, wherein in the step of irradiating, irradiation time of the red LED and irradiation time of the far red LED or the infrared LED are changed arbitrarily, respectively, is provided.

With such plant raising method, photosynthesis of the plant can be further promoted, and growth of the plant can be promoted as compared with a conventional method of irradiating a fluorescent lamp or a method of irradiating LEDs with a single wavelength or with different wavelengths at the same time.

Moreover, in the step of irradiating, any one or more of off time and irradiation intensity of the red LED and the far red LED or the infrared LED is preferably changed arbitrarily.

With such plant raising method, light can be irradiated under the best irradiation condition according to a type of the plant and each growth stage.

Moreover, in the step of preparing, the one including another light source capable of emitting light other than the red light, the far red light, and the infrared light or light in all the wavelength regions of visible light is preferably prepared as the lighting device.

Such plant raising method is suitable for raising a plant requiring the light other than the red light, the far red light, and the infrared light or the light in all the wavelength regions of the visible light for growth.

Moreover, the another light source is preferably a light source capable of emitting blue light or white light.

Since the blue light and the white light may be needed for growth depending of a plant type, the light source capable of emitting the blue light or the white light is preferably added in accordance with the plant to be raised.

### ADVANTAGEOUS EFFECTS OF INVENTION

With the lighting device for raising a plant and the plant raising method of the present invention, photosynthesis of the plant can be promoted, and growth of the plant can be promoted. Moreover, the irradiation condition can be set in accordance with the type of the plant or each growth stage, and another light source can be added.

### BRIEF DESCRIPTION OF DRAWINGS

Fig. 1 is a diagram illustrating an example of a condition of pulse irradiation in the present invention;
Fig. 2 is a diagram illustrating another example of the condition of the pulse irradiation in the present invention;
Fig. 3 is a diagram illustrating another example of the condition of the pulse irradiation in the present invention;
Fig. 4 is a constitution diagram illustrating an example of a lighting device for raising a plant of the present invention;
Fig. 5 is a diagram illustrating an example of arrangement of LEDs of the lighting device for raising a plant of the present invention;
Fig. 6 is an emission spectrum of green, yellow, orange, red, and deep red LEDs; and
Fig. 7 is an emission spectrum of a far red LED with an emission wavelength of 730 nm.

### DESCRIPTION OF EMBODIMENTS

The present invention will be described below in more detail.

As described above, a lighting device for raising a plant and a plant raising method which promote photosynthesis of the plant and grow the plant well are in demand.

Here, a photoreceptor called phytochrome in a plant will be described. Phytochrome is known to absorb red light (660 nm), to activate it and to conduct various photoreactions, while if this activated phytochrome absorbs far red light (730 nm), it returns to phytochrome in an original inactive state (form absorbing the red light). This inactivated phytochrome plays an important role of causing a shade-avoidance syndrome (leaves move for a place with more light). This phytochrome has been regarded to relate to sprouting or growth of stems in general and to be important in an initial stage of growth.

The inventors paid attention particularly to the photoreceptor called phytochrome in order to promote photosynthesis of a plant and as the result of keen examination, found that a lighting device for raising a plant including the red LED having an emission wavelength between 600 and 680 nm and a far red LED or an infrared LED having the emission wavelength between 700 to 900 nm and capable of alternately irradiating the red light emitted by the red LED and the far red light emitted by the far red LED or the infrared light emitted by the infrared LED in a pulse state and completed the present invention.

The lighting device for raising a plant of the present invention will be described below specifically by referring to the attached drawings but the present invention is not limited to them.

### [Lighting device for raising plant]

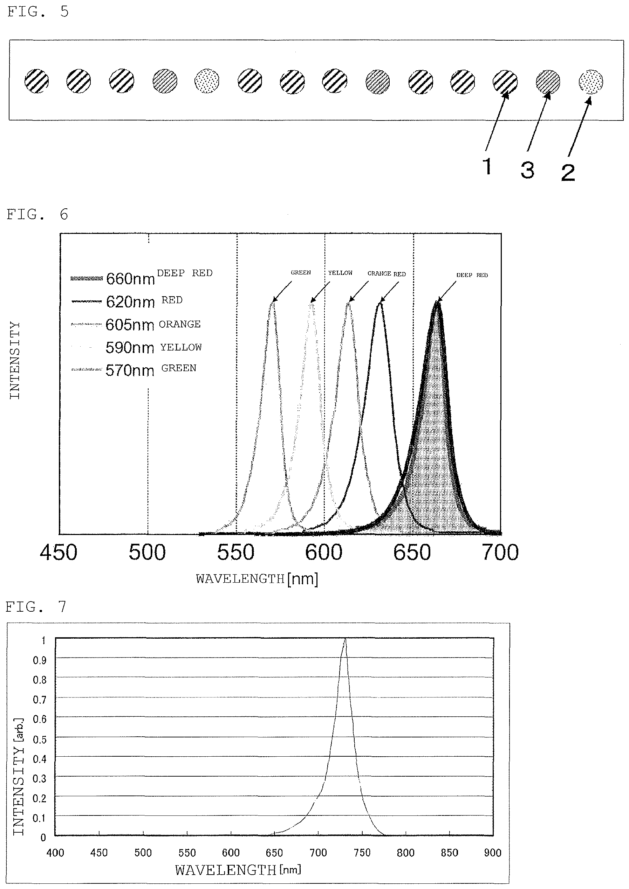

Fig. 5 is a diagram illustrating an example of arrangement of LEDs of the lighting device for raising a plant of the present invention. As illustrated in Fig. 5, the lighting device for raising a plant of the present invention includes a red LED 1 having an emission wavelength between 600 and 680 nm and a far red LED 2 having the emission wavelength between 700 and 900 nm.

In Fig. 5, an example in which the far red LED 2 is included is illustrated, but an infrared LED can be used instead of the far red LED 2. Any LED may be included as long as it is an LED having an emission wavelength between 700 and 900 nm.

Fig. 5 is an example in which the red LEDs 1 (660 nm), the far red LEDs 2 (730 nm), and blue LEDs 3 (450 nm) which is another light source which will be described later are arranged with a ratio of 9:2:3 as an example, but alignment of the LEDs is not limited to this. The numerals in a parenthesis in each of the LEDs indicate the wavelength at which emission intensity is maximized.

A photon flux can be 180 µmol/m²/s in a 250-mm distance, for example, but the photon flux is also different depending on a raising system or an environment and is not limited to that.

Moreover, the lighting device for raising a plant of the present invention is capable of alternately irradiating the red light emitted by the red LED and the far red light emitted by the far red LED or the infrared light emitted by the infrared LED in a pulse state.

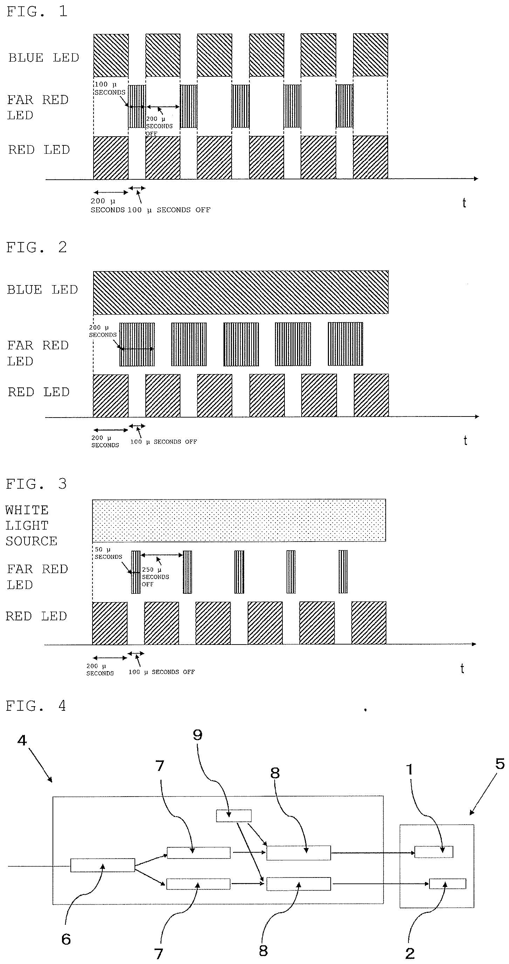

Fig. 4 is a constitution diagram illustrating an example of the lighting device for raising a plant of the present invention. As illustrated in Fig. 4, the lighting device for raising a plant of the present invention is constituted by a power supply controller 4 and a lighting tool 5, for example. The power supply controller 4 is constituted by an AC/DC converter 6, a DC/DC converter 7, and a pulse circuit 8, for example. The lighting tool 5 is constituted by a red LED 1 and the far red LED 2, for example. It is needless to say that the infrared LED can be used instead of the far red LED. As the lighting tool, another light source which will be described later can be further included. Moreover, the lighting tool can be arranged as in Fig. 5 described above. The AC/DC converter is to convert an alternating current to a direct current suitable for the LED. The DC/DC converter is to convert a voltage to that according to the LED since a lighting voltage of each of the LED is different depending on the wavelength.

Control means for alternately irradiating light emitted from these LEDs in a pulse state is not particularly limited, but a control mechanism such as a microcomputer (controller) 9 or the like can be cited, for example. In this case, by controlling the pulse circuit 8 in Fig. 4 by the microcomputer 9, timing of the pulse irradiation of the lighting tool 5 can be shifted.

By alternately irradiating the light with at least two different wavelengths as above in the pulse state, growth in the initial stage or growth of a seedling, for example, can be achieved efficiently while energy saving is achieved. Moreover, growth of a root can be also achieved efficiently. As described above, with the present invention, photosynthesis of a plant can be promoted.

Moreover, any one or more of the irradiation time, the off time, and the irradiation intensity of the red LED and the far red LED or the infrared LED, can be preferably changed arbitrarily. By controlling the power supply controller 4 in Fig. 4, these irradiation conditions can be changed arbitrarily. As a result, since the irradiation conditions can be set in accordance with the type of the plant, each growth stage, the environment and the like, growth of the plant can be further promoted.

Furthermore, even when another light source which will be described later or a blue LED, for example, is to be irradiated, the red light, the far red light or the infrared light and the blue light can be irradiated in order (irradiated sequentially in the pulse state) similarly. Moreover, the light with each wavelength may be irradiated in order as above or time without irradiation may be further provided in an irradiation cycle. Moreover, another light source does not have to irradiate in the pulse state.

### [Pulse irradiation condition]

Here, a condition of time adjustment of the irradiation time and the off time in the pulse irradiation will be specifically described by referring to the attached drawings, but the present invention is not limited to them.

Fig. 1 is a diagram illustrating an example of the pulse irradiation condition in the present invention. In the EXAMPLES which will be described later, a plant is being raised under this pulse irradiation condition. In Fig. 1, the lateral axis indicates time and a portion painted with a pattern indicates the irradiation time of each LED. As illustrated in Fig. 1, the red LED (660 nm) is synchronized with the blue LED (450 nm) which is another light source so as to share the same time irradiation and the same time OFF (pause), and while the red LED and the blue LED are turned OFF, the far red LED (730 nm)can be irradiated. In this case, the irradiation time (200 µ seconds) of the red LED and the blue LED becomes the off time (200 µ seconds) of the far red LED, and the irradiation time (100 µ seconds) of the far red LED becomes the off time (100 µ seconds) of the red LED and the blue LED.

Fig. 2 is a diagram illustrating another example of the pulse irradiation condition in the present invention. As illustrated in Fig. 2, the irradiation time of the far red LED and the red LED may be partially overlapped. Moreover, the blue LED may be continuous light.

Fig. 3 is a diagram illustrating another example of the pulse irradiation condition in the present invention. As illustrated in Fig. 3, time during which neither of the far red LED nor the red LED is irradiated (pause time) may be provided. Moreover, a light source capable of emitting white light can be used as another light source. In Fig. 3, the white light emitted from this light source is continuous light.

### [LED]

In the present invention, the red LED, the far red LED, and the infrared LED that can be included are not particularly limited as long as they have the aforementioned emission wavelengths but a peak emission wavelength (a wavelength at which the emission intensity is the maximum) is preferably included in the aforementioned wavelength range. Moreover, the LED preferably has only a single peak in the emission spectrum.

In general, the wavelength of the far red light is specified to be approximately 700 to 800 nm and the wavelength of the infrared light is specified to be approximately 700 to 1,000,000 nm, but in the present invention, it is not limited to them but it is only necessary to include an LED having an emission wavelength between 700 and 900 nm.

Fig. 6 is an emission spectrum of green, yellow, orange, red and deep red LEDs. In Fig. 6, the vertical axis indicates intensity (emission intensity) and the lateral axis indicates a wavelength. A specific example of the red LED includes that with the emission wavelength (peak emission wavelength) of 660 nm (deep red LED in Fig. 6), for example. This red LED includes AlGaInP as a material (light emitting element). The material is not limited to that but it may be anything as long as it has the aforementioned emission wavelength. For example, a red LED (red LED in Fig. 6) with the peak emission wavelength of 620 nm or an orange LED with 605 nm can be included (in the present invention, those with the emission wavelength from 600 to 680 nm are assumed to be included in the red LED). In these LEDs, the red LED with the peak emission wavelength of 660 nm is particularly preferably included since phytochrome absorbs the light with 660 nm and is activated.

Fig. 7 is an emission spectrum of the far red LED with the emission wavelength of 730 nm. In Fig. 7, the vertical axis indicates intensity and the lateral axis indicates the wavelength. The far red LED in Fig. 7 includes AlGaAs as the material. The material is not limited to that but it may be anything as long as it has the aforementioned emission wavelength.

A specific example of the infrared LED includes that with the emission wavelength of 850 nm, for example. In this case, AlGaAs can be used as the material. The material is not limited to that but it may be anything as long as it has the aforementioned emission wavelength.

In the far red LED and the infrared LED described above, the far red LED having the peak emission wavelength of 730 nm is particularly preferably included since phytochrome absorbs light with 730 nm and returns to its original inactive state.

The peak emission wavelengths of red, far red, and infrared LEDs used in the present invention do not necessarily have to overlap the wavelength (660 nm) which activates phytochrome and the wavelength (730 nm) which inactivates it.

As described above, as an irradiation light source, at least the red LED and the far red LED or the infrared LED need to be included, but moreover, another light source capable of emitting light other than the red light, the far red light, and the infrared light or light in all the wavelength (approximately 300 to 800 nm) region of the visible light may be included. For example, a green LED with the emission wavelength of 570 nm, a yellow LED with 590 nm and the like in Fig. 6 can be included.

The another light source is preferably a light source capable of emitting blue light or white light such as a blue LED and a white LED, for example. As illustrated in Fig. 5, as a light source capable of emitting the blue light, a blue LED 3 can be included. The another light source is preferably an LED in terms of suppression of power consumption but it is needless to say that the light source is not limited to an LED. As the another light source, a fluorescent lamp can be used, for example. The lighting device for raising a plant including another light source is suitable for raising a plant requiring light other than the red light, the far red light, and the infrared light or light in all the wavelength regions of the visible light for growth.

### [Plant raising method]

Furthermore, in the present invention, a plant raising method comprising steps of:
preparing a light device including a red LED having an emission wavelength between 600 and 680 nm and a far red LED or an infrared LED having an emission wavelength between 700 and 900 nm, and
irradiating the red light emitted by the red LED and the far red light emitted by the far red LED or the infrared light emitted by the infrared LED alternately in a pulse state is provided. As a result, photosynthesis of the plant can be further promoted and growth of the plant can be promoted as compared with the conventional method of irradiating a fluorescent lamp or the method of irradiating the LEDs with a single wavelength or different wavelengths at the same time.

### [Preparation step]

First, a lighting device including a red LED having an emission wavelength between 600 and 680 nm and a far red LED or an infrared LED having the emission wavelength between 700 and 900 nm is prepared. As the red LED, the far red LED, and the infrared LED, those similar to that included in the aforementioned lighting device for raising a plant can be used.

### [Irradiation step]

Subsequently, the red light emitted by the red LED and the far red light emitted by the far red LED or infrared light emitted by the infrared LED are alternately irradiated in a pulse state. The method of alternately irradiating the light emitted by these LEDs in the pulse state is not particularly limited, but by preparing the lighting device including the control mechanism such as the microcomputer 9 and the like in Fig. 4, for example, they can be alternately irradiated in the pulse state. As the pulse irradiation condition, the conditions indicated in Figs. 1 to 3 can be employed, for example, but they are not limiting.

Moreover, in the irradiation step, any one or more of the irradiation time, the off time, and the irradiation intensity of the red LED and the far red LED or the infrared LED, is preferably changed arbitrarily. As a result, the light can be irradiated under the best irradiation condition according to the type of the plant or each growth state. The method of arbitrarily changing the irradiation condition is not particularly limited but by preparing the lighting device including the power supply controller 4 in Fig. 4 described above and by controlling the power supply controller 4, these irradiation conditions can be arbitrarily changed.

Moreover, in the preparation step, as the lighting device, that further including another light source capable of emitting the light other than the red light, the far red light, and the infrared light or the light in all the wavelength regions of the visible light is preferably prepared. Such plant raising method is suitable for raising a plant requiring the light other than the red light, the far red light, and the infrared light or the light in all the wavelength regions of the visible light for growth.

Moreover, the another light source is preferably a light source capable of emitting blue light or white light. The blue light and the white light may be required for growth depending on a plant type and thus, the light source capable of emitting the blue light or the white light is preferably added in accordance with the plant to be raised. As the another light source, those similar to that included in the aforementioned lighting device for raising a plant can be used.

### EXAMPLES

Examples and comparative examples will be described below in order to explain the present invention more specifically, but the present invention is not limited to the examples.

### (Examples 1, 2, 3, 4)

Curly lettuce seedling was raised by using the irradiating device illustrated in Figs. 4 and 5.

A cultivation test was performed by fully artificial-light type hydroponic culture system, and red (660 nm), far red (730 nm), and blue (450 nm) LED pulse irradiation light sources were used. Moreover, under the condition illustrated in Fig. 1, pulse irradiation was conducted. At this time, cultivation was performed by changing the pulse irradiation time (ON time) of the red, far red, and blue LEDs for each example as illustrated in Table 1. Table 1 illustrates the conditions and cultivation results of the examples.

### (Comparative examples 1, 2)

Curly lettuce seedling was raised by using a fluorescent lamp in the comparative example 1, and a continuous irradiation type light source of red and blue LEDs was used in the comparative example 2. Table 1 illustrates the conditions and the cultivation results of the comparative examples.

**[Table 1]**

| | Pulse irradiation condition (µ seconds) | | | Average weight (g) of seedling after 14 days | Comparison with fluorescent lamp |
|---|---|---|---|---|---|
| | Red ON time | Far red ON time | Blue ON time | | |
| Example 1 | 200 | 100 | 200 | 29.0 | 1.18 |
| Example 2 | 200 | 50 | 200 | 30.7 | 1.25 |
| Example 3 | 400 | 100 | 400 | 33.2 | 1.36 |
| Example 4 | 400 | 50 | 400 | 36.8 | 1.50 |
| Comparative example 1 | Fluorescent lamp | | | 24.5 | 1.00 |
| Comparative example 2 | Red LED + blue LED continuous light | | | 28.1 | 1.15 |

As illustrated in Table 1, the examples 1 to 4 have weight increases in all the conditions and better raising efficiency than the results of the comparative example 1 using only the fluorescent lamp as a light source and the comparative example 2 using red and blue continuous light source. Particularly, in the examples 1 to 4, under the condition of the ON time (irradiation time) of the red + blue LED for 200 µ seconds and 400 µ seconds, the raising result was better with the condition of 400 µ seconds. Moreover, in comparison between the far red light irradiation time of 50 µ seconds and 100 µ seconds under the condition that the ON time of the red + blue LED is the same, a shorter time of 50 µ seconds had a better raising result than 100 µ seconds.

### (Examples 5, 6, 7, 8)

After the curly lettuce seedling was raised for 14 days under the fluorescent lamp, it was planted and the root was raised by using the irradiating device illustrated in Figs. 4 and 5. Moreover, the pulse irradiation was conducted under the conditions illustrated in Fig. 1. At this time, the pulse irradiation time of the red, far red, and blue LEDs was changed for each example as illustrated in Table 2 and the roots were raised. Table 2 illustrates the conditions of the examples and the raising results.

### (Comparative examples 3, 4)

After the curly lettuce seedling was raised for 14 days under the fluorescent lamp, it was planted and the root was raised by using the fluorescent lamp in the comparative example 3 and the red and blue LED continuous irradiation type light source in the comparative example 4. Table 2 illustrates the conditions of the comparative examples and the raising results.

**[Table 2]**

| | Pulse irradiation condition (µ seconds) | | | Average weight (g) of root after 21 days | Comparison with fluorescent lamp |
|---|---|---|---|---|---|
| | Red ON time | Far red ON time | Blue ON time | | |
| Example 5 | 200 | 100 | 200 | 79.4 | 1.11 |
| Example 6 | 200 | 50 | 200 | 87.4 | 1.22 |
| Example 7 | 400 | 100 | 400 | 84.8 | 1.19 |
| Example 8 | 400 | 50 | 400 | 89.1 | 1.25 |
| Comparative example 3 | Fluorescent lamp | | | 71.5 | 1.00 |
| Comparative example 4 | Red LED + blue LED continuous light | | | 70.5 | 0.99 |

As illustrated in Table 2, in the examples 5 to 8, the weights were increased under all the conditions rather than the results in the comparative example 3 using only the fluorescent lamp and in the comparative example 4 using the red and blue continuous light source as a light source when the root was raised and the raising efficiency was favorable. Though it is not as clear as the results of seedling raising, the weight tended to be larger in the ON time of the red + blue LED for 400 µ seconds than 200 µ seconds. Moreover, in comparison under the condition that the ON time of the red + blue LED is the same similarly to the seedling raising, the raising result was better with the far red light irradiation time of 50 µ seconds than 100 µ seconds in the root raising.

### (Example 9)

The curly lettuce root was raised under the condition that the blue light was not irradiated. The other conditions (irradiation time and the like) were set similar to those in the example 8. The result is illustrated in Table 3.

### (Comparative Example 5)

The curly lettuce root was raised under the condition that the red light was not irradiated. The other conditions (irradiation time and the like) were set similar to those in the example 8. The result is illustrated in Table 3.

**[Table 3]**

| | Pulse irradiation condition (µ seconds) | | | Average weight (g) of root after 21 days | Comparison with fluorescent lamp |
|---|---|---|---|---|---|
| | Red ON time | Far red ON time | Blue ON time | | |
| Example 9 | 400 | 50 | 0 | 80.9 | 1.13 |
| Comparative example 5 | 0 | 50 | 400 | 52.5 | 0.73 |

As is obvious from the results of the example 9 and the comparative example 5, it was known that the irradiation condition effective for photosynthesis of a plant is irradiation of red and far red, and blue has a supplementary role.

The present invention is not limited to the aforementioned embodiment. The aforementioned embodiment is exemplification and has constitution substantially the same as a technical idea described in claims of the present invention, and any of those exerting the similar working effects is included in the technical range of the present invention as described in the appended claims.

## Claims

1. A lighting device for raising plant comprising:
a red LED having an emission wavelength between 600 and 680 nm; and
a far red LED or an infrared LED having an emission wavelength between 700 and 900 nm, **characterized in that**
the lighting device is configured to alternately irradiate the red light emitted by the red LED and the far red light emitted by the far red LED or the infrared light emitted by the infrared LED in a pulse state, and wherein the lighting device is configured to arbitrarily change the irradiation time of the red LED and irradiation time of the far red LED or the infrared LED, respectively.

2. The lighting device for raising plant according to claim 1, wherein
any one or more of off time and irradiation intensity of the red LED and the far red LED or the infrared LED can be changed arbitrarily.

3. The lighting device for raising plant according to claim 1 or 2, further comprising:
another light source capable of emitting light other than the red light, the far red light, and the infrared light or light in all the wavelength regions of visible light.

4. The lighting device for raising plant according to claim 3, wherein
the another light source is a light source capable of emitting blue light or white light.

5. The lighting device for raising plant according to any one of claims 1 to 4, wherein
the irradiation time of the red LED is longer than the irradiation time of the far red LED or the infrared LED.

6. The lighting device for raising plant according to any one of claims 1 to 5, wherein
the irradiation time of the red LED is 200 µ seconds to 400 µ seconds, and the irradiation time of the far red LED or the infrared LED is 50 µ seconds to 100 µ seconds.

7. The lighting device for raising plant according to any one of claims 1 to 6, wherein
the lighting device for raising plant further comprises a power supply controller,
the power supply controller is constituted by an AC/DC converter, a DC/DC converter, and a pulse circuit, and
the pulse circuit is controlled by the microcomputer.

8. A plant raising method comprising step of:
preparing a lighting device including a red LED having an emission wavelength between 600 and 680 nm and a far red LED or an infrared LED having an emission wavelength between 700 and 900 nm,
**characterized in that** the red light emitted by the red LED and the far red light emitted by the far red LED or the infrared light emitted by the infrared LED can be alternately irradiated in a pulse state, and
irradiating the red light emitted by the red LED and the far red light emitted by the far red LED or the infrared light emitted by the infrared LED alternately in a pulse state by using the lighting device, wherein
in the step of irradiating, irradiation time of the red LED and irradiation time of the far red LED or the infrared LED are changed arbitrarily, respectively.

9. The plant raising method according to claim 8, wherein
in the step of irradiating, any one or more of off time and irradiation intensity of the red LED and the far red LED or the infrared LED is changed arbitrarily.

10. The plant raising method according to claim 8 or 9, wherein
in the preparation step, that including another light source capable of emitting light other than the red light, the far red light, and the infrared light or light in all the wavelength regions of visible light is further prepared as the lighting device.

11. The plant raising method according to claim 10, wherein
the another light source is a light source capable of emitting blue light or white light.

12. The plant raising method according to any one of claims 8 to 11, wherein
in the step of irradiating, the irradiation time of the red LED is longer than the irradiation time of the far red LED or the infrared LED.

13. The plant raising method according to any one of claims 8 to 12, wherein
in the step of irradiating, the irradiation time of the red LED is 200 µ seconds to 400 µ seconds, and the irradiation time of the far red LED or the infrared LED is 50 µ seconds to 100 µ seconds.

14. The plant raising method according to any one of claims 8 to 13, wherein
in the step of preparing, the lighting device further comprising a power supply controller, in which the power supply controller is constituted by an AC/DC converter, a DC/DC converter, and a pulse circuit, and the pulse circuit is controlled by the microcomputer is prepared.

## Patentansprüche

1. Beleuchtungsvorrichtung zum Aufziehen von Pflanzen, die Folgendes umfasst:
eine rote LED mit einer Emissionswellenlänge zwischen 600 und 680 nm; und
eine fernrote LED oder eine infrarote LED mit einer Emissionswellenlänge zwischen 700 und 900 nm, **dadurch gekennzeichnet, dass**
die Beleuchtungsvorrichtung so konfiguriert ist, dass sie abwechselnd das von der roten LED emittierte rote Licht und das von der fernroten LED emittierte rote Licht oder das von der infraroten LED emittierte infrarote Licht in einem Impulszustand abstrahlt, und wobei die Beleuchtungsvorrichtung so konfiguriert ist, dass sie die Bestrahlungszeit der roten LED und die Bestrahlungszeit der fernroten LED bzw. der infraroten LED willkürlich ändert.

2. Beleuchtungseinrichtung zum Aufziehen von Pflanzen nach Anspruch 1, wobei
eine oder mehrere der Ausschaltzeit und der Bestrahlungsstärke der roten LED und der fernroten LED oder der infraroten LED beliebig verändert werden können.

3. Beleuchtungseinrichtung zum Aufziehen von Pflanzen nach Anspruch 1 oder 2, ferner umfassend:
eine andere Lichtquelle, die in der Lage ist, anderes Licht als das rote Licht, das weit rote Licht und das infrarote Licht oder Licht in allen Wellenlängenbereichen des sichtbaren Lichts zu emittieren.

4. Beleuchtungseinrichtung zum Aufziehen von Pflanzen nach Anspruch 3, wobei
die andere Lichtquelle eine Lichtquelle ist, die blaues Licht oder weißes Licht emittieren kann.

5. Beleuchtungseinrichtung zum Aufziehen von Pflanzen nach einem der Ansprüche 1 bis 4, wobei
die Bestrahlungszeit der roten LED länger ist als die Bestrahlungszeit der fernroten LED oder der infraroten LED.

6. Beleuchtungseinrichtung zum Aufziehen von Pflanzen nach einem der Ansprüche 1 bis 5, wobei
die Bestrahlungszeit der roten LED beträgt 200 µ Sekunden bis 400 µ Sekunden und die Bestrahlungszeit der fernroten LED oder der infraroten LED beträgt 50 µ Sekunden bis 100 µ Sekunden.

7. Beleuchtungseinrichtung zum Aufziehen von Pflanzen nach einem der Ansprüche 1 bis 6, wobei
die Beleuchtungseinrichtung für die Aufzuchtanlage umfasst außerdem einen Stromversorgungsregler,
die Stromversorgungssteuerung aus einem AC/DC-Wandler, einem DC/DC-Wandler und einer Impulsschaltung besteht, und
die Impulsschaltung wird vom Mikrocomputer gesteuert.

8. Verfahren zum Aufziehen von Pflanzen, das die folgenden Schritte umfasst:
Herstellen einer Beleuchtungsvorrichtung, die eine rote LED mit einer Emissionswellenlänge zwischen 600 und 680 nm und eine fernrote LED oder eine infrarote LED mit einer Emissionswellenlänge zwischen 700 und 900 nm enthält,
**dadurch gekennzeichnet, dass** das von der roten LED emittierte rote Licht und das von der fernroten LED emittierte rote Licht oder das von der infraroten LED emittierte infrarote Licht abwechselnd in einem Impulszustand abgestrahlt werden können, und
Abstrahlen des von der roten LED emittierten roten Lichts und des von der fernroten LED emittierten roten Lichts oder des von der infraroten LED emittierten infraroten Lichts abwechselnd in einem Impulszustand unter Verwendung der Beleuchtungseinrichtung, wobei
im Schritt der Bestrahlung die Bestrahlungszeit der roten LED und die Bestrahlungszeit der fernroten LED bzw. der Infrarot-LED beliebig verändert werden.

9. Verfahren zum Aufziehen von Pflanzen nach Anspruch 8, wobei
im Schritt des Bestrahlens wird eine oder mehrere von Ausschaltzeit und Bestrahlungsintensität der roten LED und der fernroten LED oder der infraroten LED willkürlich geändert.

10. Verfahren zum Aufziehen von Pflanzen nach Anspruch 8 oder 9, wobei
in der Herstellungsstufe, die eine andere Lichtquelle enthält, die in der Lage ist, anderes Licht als das rote Licht, das fernrote Licht und das infrarote Licht oder Licht in allen Wellenlängenbereichen des sichtbaren Lichts zu emittieren, wird als Beleuchtungsvorrichtung weiter hergestellt.

11. Verfahren zum Aufziehen von Pflanzen nach Anspruch 10, wobei
die andere Lichtquelle eine Lichtquelle ist, die blaues Licht oder weißes Licht emittieren kann.

12. Verfahren zum Aufziehen von Pflanzen nach einem der Ansprüche 8 bis 11, wobei
im Schritt der Bestrahlung die Bestrahlungszeit der roten LED länger als die Bestrahlungszeit der fernroten LED oder der infraroten LED ist.

13. Verfahren zum Aufziehen von Pflanzen nach einem der Ansprüche 8 bis 12, wobei
im Schritt des Bestrahlens die Bestrahlungszeit der roten LED 200 µ Sekunden bis 400 µ Sekunden beträgt und die Bestrahlungszeit der fernroten LED oder der infraroten LED 50 µ Sekunden bis 100 µ Sekunden beträgt.

14. Verfahren zum Aufziehen von Pflanzen nach einem der Ansprüche 8 bis 13, wobei
in dem Schritt der Herstellung die Beleuchtungsvorrichtung, die ferner eine Stromversorgungssteuerung umfasst, wobei die Stromversorgungssteuerung durch einen AC/DC-Wandler, einen DC/DC-Wandler und eine Impulsschaltung gebildet wird und die Impulsschaltung durch den Mikrocomputer gesteuert wird, hergestellt wird.

## Revendications

1. Dispositif d'éclairage pour la culture de plantes comprenant :
une DEL rouge ayant une longueur d'onde d'émission comprise entre 600 et 680 nm ; et
une DEL émettant dans le rouge lointain ou une DEL infrarouge ayant une longueur d'onde d'émission comprise entre 700 et 900 nm, **caractérisé en ce que**
le dispositif d'éclairage est conçu pour irradier en alternance la lumière rouge émise par la DEL rouge et la lumière dans le rouge lointain émise par la DEL émettant dans le rouge lointain ou la lumière infrarouge émise par la DEL infrarouge dans un état d'impulsion, et dans lequel le dispositif d'éclairage est conçu pour changer arbitrairement la durée d'irradiation de la DEL rouge et la durée d'irradiation de la DEL émettant dans le rouge lointain ou de la DEL infrarouge, respectivement.

2. Dispositif d'éclairage pour la culture de plantes selon la revendication 1, dans lequel
l'un quelconque ou plusieurs parmi le temps d'arrêt et l'intensité d'irradiation de la DEL rouge et de la DEL émettant dans le rouge lointain ou de la DEL infrarouge peuvent être modifiés arbitrairement.

3. Dispositif d'éclairage pour la culture de plantes selon la revendication 1 ou 2, comprenant en outre :
une autre source de lumière apte à émettre une lumière autre que la lumière rouge, la lumière dans le rouge lointain et la lumière infrarouge ou une lumière dans toutes les régions de longueur d'onde de la lumière visible.

4. Dispositif d'éclairage pour la culture de plantes selon la revendication 3, dans lequel
l'autre source de lumière est une source de lumière apte à émettre de la lumière bleue ou de la lumière blanche.

5. Dispositif d'éclairage pour la culture de plantes selon l'une quelconque des revendications 1 à 4, dans lequel
la durée d'irradiation de la DEL rouge est plus longue que la durée d'irradiation de la DEL émettant dans le rouge lointain ou de la DEL infrarouge.

6. Dispositif d'éclairage pour la culture de plantes selon l'une quelconque des revendications 1 à 5, dans lequel
la durée d'irradiation de la DEL rouge est de 200 µ secondes à 400 µ secondes, et la durée d'irradiation de la DEL émettant dans le rouge lointain ou de la DEL infrarouge est de 50 µ secondes à 100 µ secondes.

7. Dispositif d'éclairage pour la culture de plantes selon l'une quelconque des revendications 1 à 6, dans lequel
le dispositif d'éclairage pour la culture de plantes comprend en outre un contrôleur d'alimentation électrique,
le contrôleur d'alimentation électrique est constitué par un convertisseur CA/CC, un convertisseur CC/CC et un circuit à impulsions, et
le circuit à impulsions est commandé par le micro-ordinateur.

8. Procédé de culture de plantes comprenant les étapes de :
préparation d'un dispositif d'éclairage comprenant une DEL rouge ayant une longueur d'onde d'émission comprise entre 600 et 680 nm et une DEL émettant dans le rouge lointain ou une DEL infrarouge ayant une longueur d'onde d'émission comprise entre 700 et 900 nm,
**caractérisé en ce que** la lumière rouge émise par la DEL rouge et la lumière dans le rouge lointain émise par la DEL émettant dans le rouge lointain ou la lumière infrarouge émise par la DEL infrarouge peuvent être irradiées en alternance dans un état d'impulsion, et
irradiation de la lumière rouge émise par la DEL rouge et de la lumière dans le rouge lointain émise par la DEL émettant dans le rouge lointain ou de la lumière infrarouge émise par la DEL infrarouge en alternance dans un état d'impulsion en utilisant le dispositif d'éclairage, dans lequel
à l'étape d'irradiation, la durée d'irradiation de la DEL rouge et la durée d'irradiation de la DEL émettant dans le rouge lointain ou de la DEL infrarouge sont modifiées arbitrairement, respectivement.

9. Procédé de culture de plantes selon la revendication 8, dans lequel
à l'étape d'irradiation, l'un quelconque ou plusieurs parmi le temps d'arrêt et l'intensité d'irradiation de la DEL rouge et de la DEL émettant dans le rouge lointain ou de la DEL infrarouge sont modifiés arbitrairement.

10. Procédé de culture de plantes selon la revendication 8 ou 9, dans lequel
à l'étape de préparation, celle comprenant une autre source de lumière apte à émettre une lumière autre que la lumière rouge, la lumière dans le rouge lointain et la lumière infrarouge ou une lumière dans toutes les régions de longueur d'onde de la lumière visible est en outre préparée en tant que dispositif d'éclairage.

11. Procédé de culture de plantes selon la revendication 10, dans lequel
l'autre source de lumière est une source de lumière apte à émettre de la lumière bleue ou de la lumière blanche.

12. Procédé de culture de plantes selon l'une quelconque des revendications 8 à 11, dans lequel
à l'étape d'irradiation, la durée d'irradiation de la DEL rouge est plus longue que la durée d'irradiation de la DEL émettant dans le rouge lointain ou de la DEL infrarouge.

13. Procédé de culture de plantes selon l'une quelconque des revendications 8 à 12, dans lequel
à l'étape d'irradiation, la durée d'irradiation de la DEL rouge est de 200 µ secondes à 400 µ secondes, et la durée d'irradiation de la DEL émettant dans le rouge lointain ou de la DEL infrarouge est de 50 µ secondes à 100 µ secondes.

14. Procédé de culture de plantes selon l'une quelconque des revendications 8 à 13, dans lequel
à l'étape de préparation, le dispositif d'éclairage comprenant en outre un contrôleur d'alimentation électrique, dans lequel le contrôleur d'alimentation électrique est constitué par un convertisseur CA/CC, un convertisseur CC/CC et un circuit à impulsions, et le circuit à impulsions est commandé par le micro-ordinateur est préparé.
